# EUROPÄISCHE PATENTANMELDUNG

(11) **EP 1 364 999 A1**
(43) Veröffentlichungstag der Anmeldung: **26.11.2003**
(21) Anmeldenummer: 02011436.9
(22) Anmeldetag: 24.05.2002
(51) Int. Cl.: C09J 4/00

(54) **Radikalisch härtbarer Klebstoff frei von cycloaliphatischen (Meth)Acrylaten**

(71) Anmelder: Sika Schweiz AG, 8064 Zürich (CH)
(72) Erfinder: Rittiner, Mario, 3907 Simplon-Dorf (CH); Dux, Roland, 8957 Spreitenbach (CH)
(74) Vertreter: Isler, Jörg

(57) **Zusammenfassung**

Die vorliegende Erfindung beschreibt Klebstoffe, welche radikalisch härtbar und frei von cycloaliphatischen (Meth)acrylaten sind, sowie mindestens ein Hydroxyalkyl(meth)acrylat **A** im Gehalt von 20 - 60 Gewichts-% und mindestens ein Epoxy(meth)acrylat **B** im Gehalt von 40 - 80 Gewichts-% umfassen. Der Klebstoff eignet sich besonders gut zum Verkleben von mineralischen Untergründen, insbesondere von feuchten mineralischen Untergründen, und zeichnet sich durch die weitgehende Abwesenheit von riechenden Bestandteilen aus. Weiterhin ist die Verwendung als des Klebstoffes zum Verkleben von Verankerungsmittel beschrieben.

## Beschreibung

### Technisches Gebiet und Stand der Technik

Die Erfindung betrifft Klebstoffe auf (Meth)acrylat-Basis mit guter Haftung auf mineralischen Untergründen.

Verklebungen im Hoch- und Tiefbau bedürfen einer dauerhaften guten Haftung auf mineralischen Untergründen. Eine Sonderstellung unter diesen Untergründen nimmt Beton ein. Da in diesen Anwendungsgebieten vielfach die Substrate feucht sind und nach der Applikation oft dem direktem Kontakt mit Wasser, auch über längere Zeit, ausgesetzt sind, ist einerseits die Anfangshaftung auf feuchtem Beton aber auch andererseits die Langzeithaftung unter Wasser von grosser Wichtigkeit. Sowohl eine schnelle Aushärtung, als auch eine Aushärtung bei tiefen Temperaturen, sind wirtschaftlich interessant, weil einerseits die Arbeits- und Wartezeiten reduziert werden können und andererseits Bauprojekte durch saisonal bedingte Kaltperioden nicht zu längeren Verzögerungen führen. Zunehmend wichtig ist auch im Hoch- und Tiefbau der Ökologieaspekt von grossem Interesse. Von besonderem Interesse sind solche Klebstoffe für das Verkleben von Dübeln und Anker und wird vielfach auch als chemische Verankerungen bezeichnet. Für die Verklebungen im Hoch- und Tiefbau, speziell für Verankerungen werden höchste Anforderungen an die Eigenfestigkeiten des Klebstoffes gestellt, da es sich hierbei meist um statische Verklebungen handelt. Deshalb werden hochfeste, starre Klebstoffe benötigt.

Die Haftung von (Meth)acrylat basierenden Polymeren auf feuchten mineralischen Untergründen, speziell Beton, ist schlecht. Vor allem trifft dies für die Langzeithaftung nach Wasserlagerung zu. Eine gute Anfangshaftung auf diesen feuchten Untergründen kann mit Monomeren erzielt werden, welche hydrophile Eigenschaften, wie beispielsweise Hydroxyethyl(meth)acrylat oder Hydroxypropyl-(meth)acrylat, aufweisen. Die hieraus resultierenden Polymere nehmen bei Wasserlagerung jedoch stark Wasser auf, was zu einer Erniedrigung der Eigenfestigkeit einerseits und der Haftung auf dem Untergrund andererseits führt.

Polymere, resultierend aus hydrophoben (Meth)acrylat-Monomeren und/oder -Oligomeren, weisen generell schlechte Anfangshaftung auf mineralischen Untergründen, im speziellen feuchtem Beton, auf.

JP11106453 beschreibt ein Bindemittel, bestehend aus Epoxy-(meth)acrylat, Hydroxy(meth)alkylacrylat sowie Dicyclo-penta-dienyloxyalkylen-(meth)-acrylat. Dicyclo-penta-dienyl-(meth)acrylat weist den grossen Nachteil auf, dass es einen penetrant störenden Geruch aufweist, was die Anwendung dieses Monomers stark einschränkt. Dicyclopentadien, welches das Ausgangsmaterial sowohl für Dicyclo-penta-dienyl-(meth)-acrylat als auch Dicyclo-penta-dienyloxyethyl-(meth)-acrylat darstellt, ist ebenfalls extrem stark riechend, verfügt über einen tiefen Flammpunkt und ist sehr toxisch. Dies führt in der Produktion dieser Monomere zu grossen Problemen und zu finanziellen Mehraufwand, was sich einerseits auf den hohen Preis dieser Monomere sowie deren schlechte Verfügbarkeit auf dem Markt auswirkt.

### Aufgabe und Lösung

Es ist daher die Aufgabe dieser Erfindung, die beschriebenen Nachteile und Probleme von Klebstoffen auf Basis (Meth)acrylat zu überwinden und einen Klebstoff zu formulieren, welches gleichzeitig gute Anfangshaftung, eine Langzeithaftung auf mineralischen Untergründen, speziell Beton, sowie hohe Eigenfestigkeit aufweist. Überraschenderweise wurde nun gefunden, dass die Nachteile des Standes der Technik durch erfindungsgemässe Klebstoffe gemäss Anspruch 1 beseitigt werden können.

### Zusammenfassung der Erfindung

Die vorliegende Erfindung beschreibt Klebstoffe, welche radikalisch härtbar und frei von cycloaliphatischen (Meth)acrylaten sind, sowie mindestens ein Hydroxyalkyl(meth)acrylat **A** im Gehalt von 20 - 60 Gewichts-% und mindestens ein Epoxy(meth)acrylat **B** im Gehalt von 40 - 80 Gewichts-% umfassen. Der Klebstoff eignet sich besonders gut zum Verkleben von mineralischen Untergründen, insbesondere von feuchten mineralischen Untergründen, und zeichnet sich durch die weitgehende Abwesenheit von riechenden Bestandteilen aus. Weiterhin ist die Verwendung als des Klebstoffes zum Verkleben von Verankerungsmittel beschrieben.

### Ausführliche Beschreibung der Erfindung

Die vorliegende Erfindung beschreibt Klebstoffe, welche radikalisch härtbar, frei von cycloaliphatischen (Meth)acrylaten sind und zumindest ein Hydroxyalkyl(meth)acrylat **A**, mindestens ein Epoxy(meth)acrylat **B**, enthalten, wobei der Gehalt an **A** 20 - 60 Gewichts-% und der Gehalt von **B** 40 - 80 Gewichts-% bezogen auf **A+B** = 100 Gewichts-% beträgt.

Unter ,(Meth)acrylate' werden hier und im Folgenden sowohl Ester der Acrylsäure als auch der Methacrylsäure verstanden.

Beim Hydroxyalkyl(meth)acrylat **A** handelt es sich vorteilhaft um Verbindungen der Formel 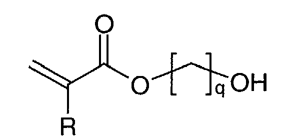 wobei R=H, CH₃ und q = 2- 4. Bevorzugt werden Verbindungen mit q = 3 oder q = 4. Als besonders vorteilhaft hat sich Hydroxypropyl(meth)acrylat erwiesen.

Als Epoxy(meth)acrylat **B** sind bevorzugt Verbindungen der Formel: 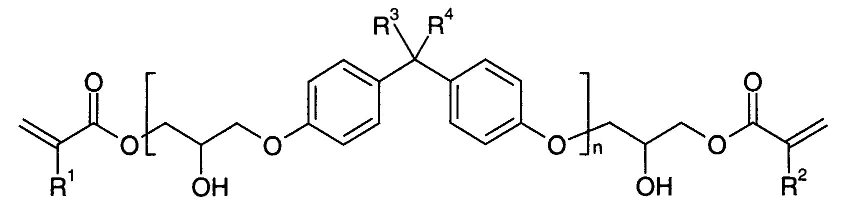 wobei R¹, R²=H, CH₃, sowie R³, R⁴= H, CH₃ und n = 1 - 2 bedeuten. Besonders bevorzugt sind Verbindungen, bei welchen die Substituenten R¹ und R² identisch und/oder R³ und R⁴ identisch, bevorzugt die Methylgruppe, sind.

In einer Ausführungsvariante werden Epoxy(meth)acrylat **B** der Formel eingesetzt: 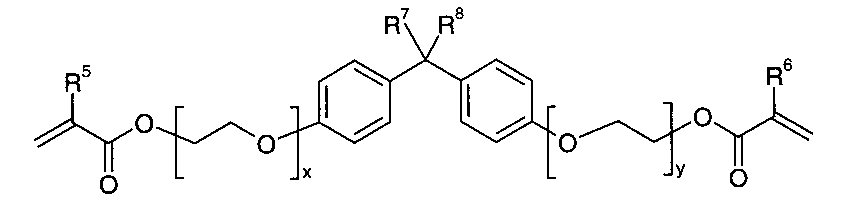 wobei R⁵, R⁶=H, CH₃, R⁷, R⁸= H, CH₃ und x, y = 1 - 3 bedeuten. Besonders bevorzugt sind Verbindungen, bei welchen die Substituenten R⁵ und R⁶ identisch und/oder R⁷ und R⁸ identisch, bevorzugt die Methylgruppe, sind.

Zusätzlich können dem Klebstoff Silane beigefügt sein. Hierbei kommen vor allem Trialkoxysilane zum Einsatz. Insbesondere handelt es sich hierbei um nicht-olefinisch ungesättigte Trimethoxysilanen, wie beispielsweise 3-Mercaptopropyltrimethoxysilan oder 3-Glycidyloxypropyltrimethoxysilan. Typischerweise sind Silane in der Konzentration von 1-10 Gewichts-% vorhanden, bezogen auf **A+B** = 100 Gewichts-%.

Weiterhin ist die Verwendung von Beschleunigern möglich. Als Beschleuniger werden normalerweise tertiäre Amine und/oder ein Salz und/oder ein Komplex von Übergangsmetallen, insbesondere solche Salze oder Komplexe von Kobalt, Nickel und/oder Kupfer, verwendet. Als tertiäre Amine vorteilhaft sind solche ausgewählt aus der Gruppe N,N-Dimethylanilin, N,N-Dimethyltoluidin, N,N-Di-ethyl-anilin, N,N-Diethyltoluidin, N,N-bis(2-hydroxyethyl)-p-Toluidin, ethoxylierte p-Toluidine, N,N-bis(2-hydroxyethyl)-ptoluidin oder Mischungen derselben. Der Beschleuniger wird in einem Konzentrationsbereich von 0.2 - 5 Gewichts-%, vorzugsweise 0.2 - 2.5 Gewichts-% eingesetzt, bezogen auf **A+B** = 100 Gewichts-%.

Es ist dem Fachmann bekannt, dass kommerziell erhältliche (Meth)acrylate Inhibitoren zur Stabilisierung enthalten. Zusätzlich hierzu können jedoch gezielt Inhibitoren zur Verlangsamung der Reaktionszeit eingesetzt werden. Als Inhibitoren kommen solche Verbindungen in Frage, welche dem Fachmann bekannt sind, dass sie die radikalische Polymerisation von (Meth)acrylaten verlangsamen. Beispielsweise handelt es sich hierbei um Hydrochinone, Methylhydrochinone, Phenothiazine, Kresole, Catechole, wie Hydrochinon, Hydrochinonmonoethylester, 2,5-di-tert-Butylhydrochinon, tert.Butyl-p-Kresol, tert.-Butylcatechol.

Typischerweise werden für diesen Zweck verwendete Inhibitoren in einer Konzentration bis 1% Gewichts-% eingesetzt, bezogen auf **A+B** = 100 Gewichts-%.

Durch den gezielten Einsatz von Beschleunigern und Inhibitoren kann der Fachmann den Härtungsverlauf des Klebstoffs in einer gewünschten Art und Weise beeinflussen.

Der Klebstoff enthält vorteilhaft einen oder mehrere Reaktionsinitiatoren. Geeignete Initiatoren sind aus dem Stand der Technik bekannt. Speziell geeignet sind organische Peroxide, Hydroperoxide und/oder Alkylperester. Als Beispiele hierfür seinen unter anderem Metylethylketonperoxid, Cyclohexanperoxide, Dibenzoylperoxid, Metylethylketonhydroperoxide, p-Chlorbenzoylperoxid, Acetylacetonperoxid, Cumylhydroperoxid, tert.-Butyl-hydroperoxid, tert.-Butyl-perbenzoat erwähnt. Als besonders vorteilhaft hat sich Dibenzoylperoxid erwiesen.

Die Anwesenheit zusätzlicher Bestandteile im Klebstoff, wie Weichmacher, Extender, Thixotropiermittel, Additive zur Beeinflussung der Fliesseigenschaften, anorganische Füllstoffe, organische Füllstoffe, Pigmente und Mischungen derselben ist möglich. Als Extender werden neben Lösungsmitteln mit einem Siedepunkt von höher als 170°C auch Bisphenol-A-Diglycidylether sowie Ricinusöl verstanden.

Als Thixotropiermittel können eignen sich sowohl anorganische Substanzen wie beispielsweise Bentonite oder pyrogene Kieselsäuren oder organische Substanzen wie Ricinusöl-Derivate, spezielle Polyamide, Polyharnstoffe und Polyurethane.

Bevorzugte anorganische Füllstoffe sind insbesondere Sand, Quarz, Glas und Hohlglaskugeln, Korund, Kreide, Talkum, Keramik, beschichtete und/oder unbeschichtete Kreide, und amorphe Kieselsäure, sowie deren Mischungen. Der Gehalt an Füllstoffen ist abhängig von der Anwendung des Klebstoffes. Es sind Füllstoffgehalte bis 300 Gewichts-% bezogen auf **A+B** = 100 Gewichts-%. Bevorzugt sind Füllstoffgehalte zwischen 100-200 Gewichts-% bezogen auf **A+B** = 100 Gewichts-%. Wie der Fachmann weiss, ist die Korngrössenverteilung von grösster Wichtigkeit für die Verarbeitung und die Lagerstabilität des Klebstoffes.

Für die Anwendung eines Klebstoffes ist ein thixotropes Verhalten von Bedeutung, was eine vertikale Anwendung oder eine Anwendung über Kopf ermöglicht, sowie ein Nachlaufen nach der Druckentlastung des Appliziergerätes verhindert.

In einer Ausführungsform enthält oder besteht der Klebstoff neben mindestens einem Hydroxyalkyl(meth)acrylat **A** und mindestens einem Epoxy(meth)acrylat **B**, mindestens einen Beschleuniger, einen Reaktionsinitiator, anorganische Füllstoffe und gegebenenfalls mindestens eine Verbindung aus der Gruppe umfassend Thixotropiermittel, Weichmacher, Pigmente, Inhibitoren und/oder Extender.

Vorteilhaft ist ein solcher Klebstoff zweikomponentig. Eine erste Ausführungsform ist dadurch gekennzeichnet, dass die erste Komponente neben einem Hydroxyalkyl(meth)acrylat **A** und mindestens einem Epoxy(meth)acrylat **B**, mindestens einen Beschleuniger, anorganische Füllstoffe und gegebenenfalls mindestens eine Verbindung aus der Gruppe umfassend organische Füllstoffe, Thixotropiermittel, Weichmacher, Pigmente, Inhibitoren und/oder Extender enthält oder daraus besteht.

Eine zweite Ausführungsform ist dadurch gekennzeichnet, die zweite Komponente neben mindestens einem Reaktionsinitiator gegebenenfalls mindestens eine Verbindung aus der Gruppe umfassend organische Füllstoffe, Thixotropiermittel, Weichmacher, Pigmente, Inhibitoren und/oder Extender enthält oder daraus besteht.

Besonders vorteilhaft ist die Ausführungsform in der die erste Komponente neben einem Hydroxyalkyl(meth)acrylat **A** und mindestens einem Epoxy(meth)acrylat **B**, mindestens einen Beschleuniger, anorganische Füllstoffe und gegebenenfalls mindestens eine Verbindung aus der Gruppe umfassend organische Füllstoffe, Thixotropiermittel, Weichmacher, Pigmente, Inhibitoren und/oder Extender enthält oder daraus besteht und die zweite Komponente neben mindestens einem Reaktionsinitiator gegebenenfalls mindestens eine Verbindung aus der Gruppe umfassend organische Füllstoffe, Thixotropiermittel, Weichmacher, Pigmente, Inhibitoren und/oder Extender enthält oder daraus besteht. Die Volumenverhältnisse der ersten Komponente zur zweiten Komponente ist beträgt hierbei 20:1 bis 1:20, insbesondere 20:1 bis 1:2, bevorzugt etwa 10:1 bis etwa 1:1.

Es ist jedoch auch denkbar, dass mindestens der Reaktionsinitiator oder Beschleuniger mikroverkapselt sind und dadurch ein 1-Komponentensystem realisiert werden kann.

Vorteilhaft sind keine hydraulisch abbindenden und/oder polykondensierbaren anorganischen Zusätze wie Gips, Zement, Wasserglas etc. enthalten. Solche Zusätze können die Langzeitstabilität des Klebstoffs negativ beeinflussen.

Der erfindungsgemässe Klebstoff kann für verschiedenste Anwendungen verwendet werden. Speziell vorteilhaft ist sein Einsatz im Hochund Tiefbau. Nicht limitierende Beispiele für die Anwendungen seien Beton-Reparaturmörtel, Untergrundverfestigungen, Kanalsanierungen oder Brückensanierungen und sofort genannt. Als speziell geeignet hat sich der Klebstoff gezeigt für den Einsatz als Verankerungsklebstoff. Mit dem Klebstoff werden in einem mineralischen Untergrund Verankerungsmittel verklebt. Als Verankerungsmittel sind vor allem Armierungseisen, Ankerstangen, Gewindestangen, Schrauben oder Dübeln zu nennen. Als mineralisch sind beispielsweise Gesteine, Felsen, zementöse Materialien, insbesondere Beton, aber auch Ziegelsteine, Backsteine und ähnliches zu verstehen. Die für diese Verankerungsmittel benützten Öffnungen können Öffnungen jeglicher Art, insbesondere natürliche oder künstlich erzeugte Löcher oder Spalten, sein. Insbesondere handelt es sich hierbei um Bohrlöcher, welche maschinell erzeugt werden. Der Term ,'verklebt' und ,Klebstoff' schliesst in diesem gesamten Text nicht aus, dass die Verbundpartner zumindest in gewissen Bereichen nicht stoffschlüssig oder kraftschlüssig verbunden sind. Dies ist speziell in der vorgängig beschriebenen Anwendung als Verankerungsklebstoff häufig der Fall.

Für den Einsatz als Klebstoff für Verankerungszwecke eignen sich besonders Klebstoffe, in denen der Gehalt des Hydroxyalkyl(meth)acrylat **A** zwischen 20 und 30 Gewichts-%, insbesondere zwischen 25 und 30 Gewichts-%, bezogen auf **A+B**=100 Gewichts-% beträgt.

Der Klebstoff kann hergestellt werden indem zum Bindemittel die festen Füllstoffe unter Rühren, zugemischt werden. Allenfalls kann der Einsatz eines Dissolvers angezeigt sein. Da es sich bei den Epoxy(meth)acrylaten **B** um teils höher viskose Verbindungen handelt, kann es von Vorteil sein, dass dieses zum Hydroxyalkyl(meth)acrylat **A** unter einer Bildung einer Vormischung zugegeben. Hierfür kann es vorteilhaft sein, das Epoxy(meth)acrylat **B** aufzuheizen. Hierbei muss aus Sicherheitsgründen jedoch strengstens darauf geachtet werden, dass die Temperatur nicht allzu hoch zu liegen kommt, und dass diese Temperaturerhöhung nicht mehrmals und nicht allzu lange erfolgt, da ansonsten vor allem in industriellen Mengen eine unkontrollierte Polymerisation erfolgen kann mit damit verbundenem beträchtlichem Gefährdungspotential. Um ein homogenes Einmischen der Feststoffe ins Bindemittel zu erreichen, wird vorteilhaft ein Anlegen eines leichten Vakuums während des Mischens angewendet.

Der Klebstoff kann manuell oder maschinell appliziert werden. Bevorzugt für kleinere Anwendungen werden Handapplikationsgeräte, wie beispielsweise 2-Komponenten-Kartuschen oder Mehrkammerbeutel, insbesondere wie in WO0144074 beschrieben, während für grössere Anwendungen Pumpen und/oder Roboter zum Einsatz gelangen können. 2-Komponente-Kartuschen umfassen hierbei Dual-Kartusche als auch Koaxial-Kartuschen. Bevorzugt wird ein Mehrkammerschlauchbeutel, insbesondere ein Zweikammerschlauchbeutel, welcher im Gegensatz zur Dual-Kartusche, kein spezielles Applikationsgerät benötigt, sondern eine für Einkomponentenbeutel übliches Auspressgerät verwendet.

Der Klebstoff wird vorteilhaft mit einem Statikmischer bei der Applikation gemischt.

Hierbei ist weiterhin zu beachten, dass die Auspressbarkeit speziell im Zusammenhang der Applikation mittels Handapplikationsgeräten, auch bei relativ tiefen Temperaturen (z.B. 5°C), gegeben ist. Weiterhin soll ein geringer Strömungswiderstand in einem Statikmischer erzielt werden.

Der Klebstoff zeichnet sich durch eine gute Haftung aus auf mineralischen, vorzugsweise zementösen Untergründen, insbesondere Beton. Für feuchte Untergründe dieses Typs ist der Klebstoff ebenfalls geeignet. Der Klebstoff ist auch für andere Materialien, wie Metalle geeignet. In diesem Fall kann eine Primerbehandlung dieser Materialien notwendig sein. Bevorzugt ist jedoch zumindest ein zu verklebendes Material mineralisch, vorzugsweise zementös, insbesondere Beton, welches auch feucht sein kann.

Es ist vielfach vorteilhaft, dass ein vor der Applikation des Klebstoffs kein Primer aufgetragen werden muss.

### Beispiele

Die in Tabelle 1 aufgeführten Beispiele sind einige Beispiele von erfindungserfindungsgemässen Klebstoffen.

Die Formulierungen wurden jeweils auf Betongartenplatten appliziert. Die Betonplatten wurden zuvor sandgestrahlt, um eine allfällig vorhandene Betonhaut zu entfernen. Anschliessend wurden die Platten mit Wasser gereinigt. Eine so vorbereitete ,trockene' Gartenbetonplatte wies eine Oberflächenfeuchtigkeit von maximal 2% auf.

Die feuchte Betonplatte wurde nach der analogen Reinigung während mindestens 2 Wochen unter Wasser bei Raumtemperatur gelagert. Vor Gebrauch wurde die Platte das auf der Oberflächen vorhandene Wasser mit einem Lappen grob entfernt. Die so vorbereitete Betonplatte wies eine Oberflächenfeuchtigkeit zwischen 5 und 10% auf und wurde sofort für die Applikation eingesetzt.

Die Formulierungen aus Tabelle 1 wurden in einer Schichtdicke von ca. 2 mm appliziert. Das Benzoylperoxid in Weichmacher wurde erst vor der Applikation des Klebstoffs beigemischt. Die Schichtdicke wurde mittels einem Selbstklebeband dieser Stärke und ein abschliessendes Abziehen gewährleistet.

Nach dem Messen des 2 Stunden Haftzugwertes (entspricht in Tabelle 2 Anfangswert) werden die Platten bei Raumtemperatur unter Wasser gelagert.

Zur Messung des Haftzugwertes wurde eine Kernbohrung von 3 cm Durchmesser und ca. 2 cm Tiefe durchgeführt. Die zu verklebende Oberfläche wurde abgetrocknet und angeschliffen. Anschliessend wurde eine Stahlrondelle mit einem schnellhärtenden Methacrylatklebstoff aufgeklebt und mittels Haftzuggerät die Haftung mit einer Zuggeschwindigkeit von ca. 2 mm / min getestet.

Für die Wasseraufnahme wurden Zugfestigkeitshanteln hergestellt und die Gewichtszunahme nach Unterwasserlagerung mittels Wägung im Vergleich zum jeweiligen Gewicht vor der Wasserlagerung bestimmt.

Die Zugfestigkeit Zugscherfestigkeit wurde an Zugfestigkeitshanteln aus dem Klebstoff auf einer Zwick Apparatur mit einer Zuggeschwindigkeit von 5 mm/min gemäss DIN EN 53504 bestimmt.

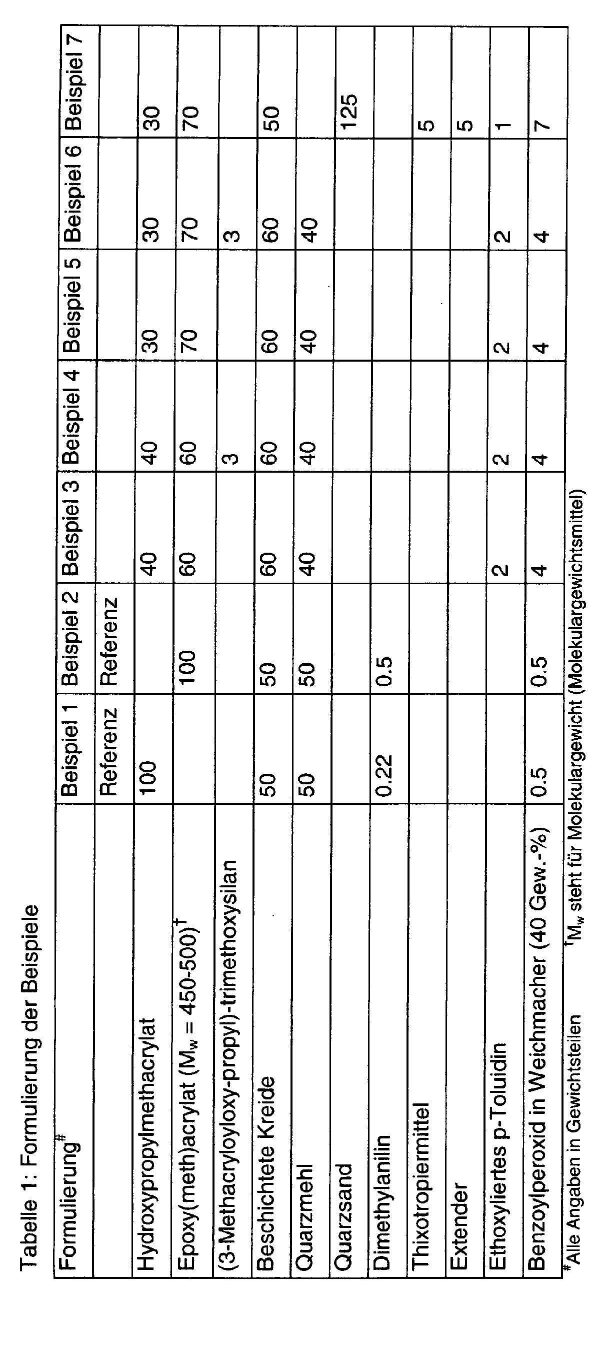

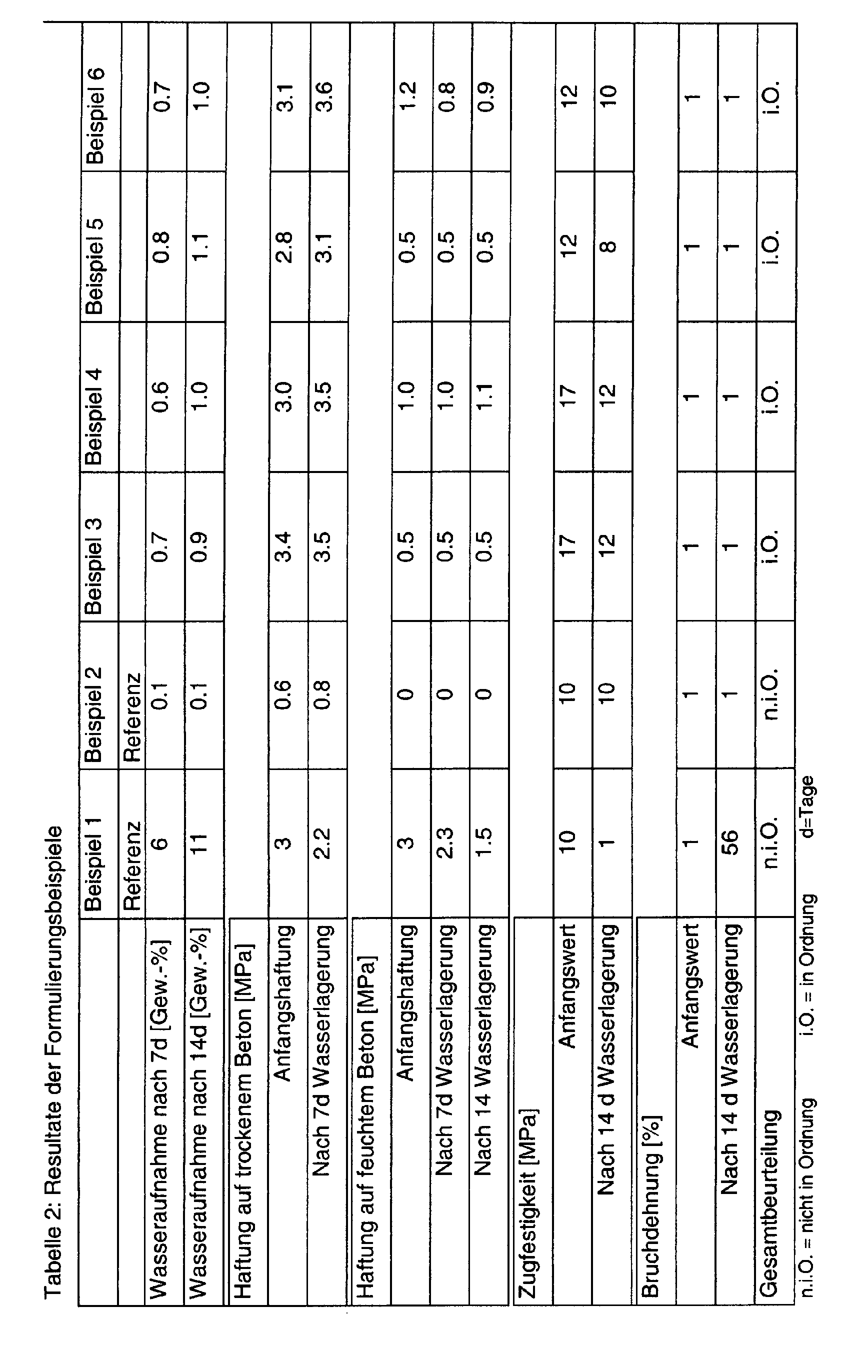

Aus den Resultaten der Tabelle 2 ist ersichtlich, dass ersichtlich, dass reines Hydroxypropylmethacrylat (Beispiel 1) sehr schnell grosse Mengen an Wasser aufnimmt und in den Zugfestigkeit und den Haftzugfestigkeiten schnell abnimmt. Beim reinen Epoxy(meth)acrylat (Beispiel 2) kann keine Anfangshaftung auf feuchtem Beton festgestellt werden, während jedoch die Wasseraufnahme nach Wasserlagerung zwar gering ist. Die erfindungsgemässen Beispiele 3 bis 6 zeigen, dass sowohl Anfangshaftung auf feuchtem Beton als auch die Langzeithaftung gewährleistet ist. Beispiele 4 und 6 zeigen, dass die Haftung durch (3-Methacryloyloxy-propyl)-trimethoxysilans als Beispiel für ein olefinisch ungesättigte Trimethoxysilanen nur minim bis gar nicht positiv beeinflusst wird. Beispiel 7 stellt einen Klebstoff dar, welcher sich gut für Verankerungszwecke eignet, wie die Resultate von Tabelle 3 zeigt.

**Tabelle 3:**

| Ausreisskraft von Gewindestangen mit Klebstoff (Beispiel 7) verklebt | | |
|---|---|---|
| | M12-Gewindestange | M20-Gewindestange |
| Bohrlochdurchmesser | 14 mm | 24 mm |
| Bohrlochtiefe | 115 mm | 170 mm |
| Zeit nach Verklebung | Ausreisskraft | |
| 2 Stunden (feucht) | 47 kN | |
| 2 Stunden (trocken) | 62 kN | 160 kN |
| 1 Tag (trocken) | 64 kN | 170 kN |
| 7 Tage (trocken) | 65 kN | 170 kN |

Die Ausreissversuche wurden in einer Betonplatte der C25/30 Qualität nach ETAG durchgeführt. Es handelte sich um eine trockene Platte (,trocken' in Tab. 3) oder um eine vorgängig unter Wasser gelagerte Platte (,feucht' in Tab. 3). Hierbei wurden mit einem Schlagbohrhammer Bohrlöcher der angegebenen Dimensionen hergestellt. Daraufhin wurden die Löcher mit einer Rundbürste gereinigt. Anschliessend wurde in das Bohrloch mittels Statikmischer Klebstoff appliziert. Daraufhin wurde langsam eine M12- respektive M20-Gewindestange aus hochfestem Stahl unter leichtem Drehen der Stange in das Loch bis zum Anschlag gedrückt. Nach Verstreichen der angegebenen Zeit wurde die Gewindestange mittels einer handelsüblichen Hydraulikpresse und Krafteinleitung mittels Muttern aus hochfestem Stahl herausgezogen.

## Patentansprüche

1. Radikalisch härtbarer Klebstoff und frei von cycloaliphatischen (Meth)acrylaten umfassend mindestens ein Hydroxyalkyl(meth)acrylat **A**, mindestens ein Epoxy(meth)acrylat **B**, **dadurch gekennzeichnet, dass** der Gehalt an **A** 20 - 60 Gewichts-% und der Gehalt von **B** 40 - 80 Gewichts-% bezogen auf **A+B** = 100 Gewichts-% beträgt.

2. Radikalisch härtbarer Klebstoff gemäss Anspruch 1, **dadurch gekennzeichnet, dass** das Hydroxyalkyl(meth)acrylat **A** durch die Formel bestimmt ist: 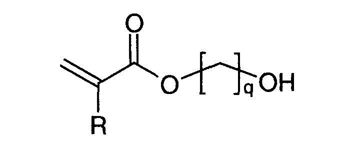 mit R=H, CH₃ und q = 2 - 4, vorzugsweise 3 oder 4, insbesondere 3.

3. Radikalisch härtbarer Klebstoff gemäss Anspruch 1 oder 2, **dadurch gekennzeichnet, dass** das Epoxy(meth)acrylat **B** durch die Formel bestimmt ist: 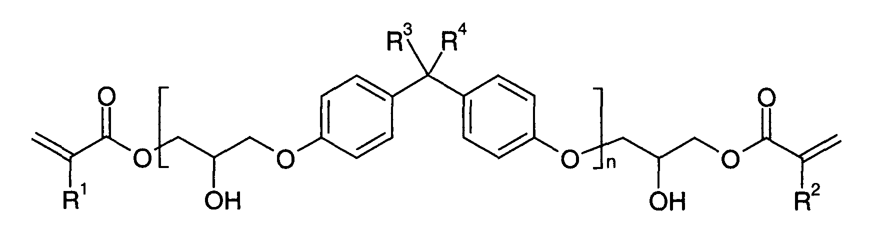 wobei
R¹, R²=H, CH₃, vorzugsweise R¹ = R²;
R³, R⁴= H, CH_{3,} vorzugsweise R³ = R⁴ insbesondere R³=R⁴=CH₃;
und n = 1 - 2 darstellen.

4. Radikalisch härtbarer Klebstoff gemäss Anspruch 1 oder 2, **dadurch gekennzeichnet, dass** das Epoxy(meth)acrylat **B** durch nachstehende Formel bestimmt ist: 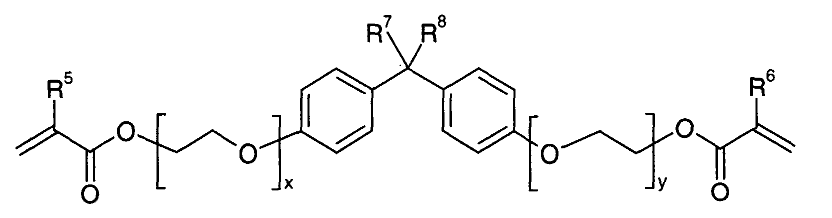 wobei
R⁵, R⁶=H, CH₃, vorzugsweise R⁵ = R⁶;
R⁷, R⁸= H, CH₃, vorzugsweise R⁷ = R⁸ insbesondere R⁷=R⁸=CH₃;
und x, y = 1 - 3 darstellen.

5. Radikalisch härtbarer Klebstoff gemäss einem der vorhergehenden Ansprüche, **dadurch gekennzeichnet, dass** er zusätzlich mindestens ein nicht-olefinisch ungesättigtes Trimethoxysilan, insbesondere 3-Mercaptopropyltrimethoxysilan oder 3-Glycidyloxypropyltrimethoxysilan, im Anteil von 1-10 Gewichts-% enthält, bezogen auf **A+B** =100 Gewichts-%.

6. Radikalisch härtbarer Klebstoff gemäss einem der vorhergehenden Ansprüche, **dadurch gekennzeichnet, dass** er zusätzlich Beschleuniger enthält, im Anteil von 0.2 - 5 Gewichts-%, vorzugsweise 0.2 - 2.5 Gewichts-%, bezogen auf **A+B** =100 Gewichts-%.

7. Radikalisch härtbarer Klebstoff gemäss Anspruch 6, **dadurch gekennzeichnet, dass** der Beschleuniger ein tertiäres Amin und/oder ein Salz und/oder ein Komplex von Übergangsmetallen ist.

8. Radikalisch härtbarer Klebstoff gemäss Anspruch 7, **dadurch gekennzeichnet, dass** der Beschleuniger ausgewählt ist aus der Gruppe umfassend N,N-Dimethylanilin, N,N-dimethyltoluidin, N,N-Di-ethyl-anilin, N,N-Diethyltoluidin, N,N-bis(2-hydroxyethyl)-p-Toluidin, ethoxylierte p-Toluidine, N,N-bis(2-hydroxyethyl)-p-toluidin oder Mischungen derselben.

9. Radikalisch härtbarer Klebstoff gemäss Anspruch 7, **dadurch gekennzeichnet, dass** die Salze und/oder Komplexe von Übergangsmetalle ausgewählt sind aus Salzen oder Komplexen der Übergangsmetalle Kobalt, Nickel und/oder Kupfer.

10. Radikalisch härtbarer Klebstoff gemäss einem der vorhergehenden Ansprüche, **dadurch gekennzeichnet, dass** er zusätzlich mindestens einen Inhibitor enthält, im Anteil von kleiner 1.0 Gewichts-%, bezogen auf **A+B** = 100 Gewichts-%.

11. Radikalisch härtbarer Klebstoff gemäss einem der vorhergehenden Ansprüche, **dadurch gekennzeichnet, dass** er zur Aushärtung mindestens einen Reaktionsinitiator enthält, vorzugsweise mindestens ein organisches Peroxid, insbesondere Benzoylperoxid.

12. Radikalisch härtbarer Klebstoff gemäss einem der vorhergehenden Ansprüche, **dadurch gekennzeichnet, dass** er zusätzliche Bestandteile enthält ausgewählt aus der Gruppe umfassend Weichmacher, Extender, Thixotropiermittel, Additive zur Beeinflussung der Fliesseigenschaften, anorganische Füllstoffe, organische Füllstoffe, Pigmente und Mischungen derselben.

13. Radikalisch härtbarer Klebstoff gemäss einem der vorhergehenden Ansprüche, **dadurch gekennzeichnet, dass** er neben mindestens einem Hydroxyalkyl(meth)acrylat **A** und mindestens einem Epoxy(meth)acrylat **B**, mindestens einen Beschleuniger, einen Reaktionsinitiator, anorganische Füllstoffe und gegebenenfalls mindestens eine Verbindung aus der Gruppe umfassend Thixotropiermittel, Weichmacher, Pigmente, Inhibitoren und/oder Extender enthält oder daraus besteht.

14. Radikalisch härtbarer Klebstoff gemäss einem der vorhergehenden Ansprüche, **dadurch gekennzeichnet, dass** er zweikomponentig ist.

15. Radikalisch härtbarer Klebstoff gemäss Anspruch 14 **dadurch gekennzeichnet, dass** die erste Komponente neben einem Hydroxyalkyl(meth)acrylat **A** und mindestens einem Epoxy(meth)acrylat **B**, mindestens einen Beschleuniger, anorganische Füllstoffe und gegebenenfalls mindestens eine Verbindung aus der Gruppe umfassend organische Füllstoffe, Thixotropiermittel, Weichmacher, Pigmente, Inhibitoren und/oder Extender enthält oder daraus besteht.

16. Radikalisch härtbarer Klebstoff gemäss Anspruch 14 oder 15 **dadurch gekennzeichnet, dass** die zweite Komponente neben mindestens einem Reaktionsinitiator gegebenenfalls mindestens eine Verbindung aus der Gruppe umfassend organische Füllstoffe, Thixotropiermittel, Weichmacher, Pigmente, Inhibitoren und/oder Extender enthält oder daraus besteht.

17. Radikalisch härtbarer Klebstoff gemäss einem der vorhergehenden Ansprüche, **dadurch gekennzeichnet, dass** der Gehalt am Hydroxyalkyl(meth)acrylat **A** 20 - 30 Gewichts-%, insbesondere 25 - 30 Gewichts-% beträgt.

18. Verwendung eines Klebstoffes gemäss einem der Ansprüche 1-17 zum Verkleben von Artikeln, von denen mindestens ein Artikel aus einem mineralischen, vorzugsweise zementösen, Material, insbesondere Beton, besteht.

19. Verwendung eines Klebstoffes gemäss Anspruch 18, **dadurch gekennzeichnet, dass** das mineralische Material ein feuchtes mineralisches, vorzugsweise zementösen, Material, insbesondere Beton ist.

20. Verwendung des Klebstoffes gemäss einem der Ansprüche 1-17 als Verankerungsklebstoff, insbesondere zum Verkleben von Verankerungsmittel, vorzugsweise Ankerstangen, Schrauben oder Dübel in Bohrlöchern in mineralischem Untergrund.

21. Verfahren zur Herstellung des Klebstoffs gemäss einem der Ansprüche 1-17.

22. Verfahren zur Herstellung gemäss Anspruch 21, **dadurch gekennzeichnet, dass** es einen Schritt des Abfüllens der zwei Komponenten in Behältnisse, vorzugsweise Kartuschen und Beutel, insbesondere Dual-, Koaxial-Kartuschen oder Mehrkammerschlauchbeutel umfasst.

23. Verfahren der Anwendung des Klebstoffs gemäss einem der Ansprüche 1-17, **dadurch gekennzeichnet, dass** der Auftrag des Klebstoffs ohne vorgängigen Primerauftrag erfolgt.
